(19) Europäisches Patentamt
European Patent Office
Office européen des brevets

(11) EP 1 095 701 A1

(12) **DEMANDE DE BREVET EUROPEEN**

(43) Date de publication:
**02.05.2001 Bulletin 2001/18**

(21) Numéro de dépôt: **00402915.3**

(22) Date de dépôt: **20.10.2000**

(51) Int Cl.[7]: **B01J 20/28**, B01J 20/20, B01D 53/02, C01B 3/56, B01D 53/047, B01D 53/04, C01B 31/08

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.10.1999 FR 9913351**

(71) Demandeur: **L'AIR LIQUIDE, SOCIETE ANONYME POUR L'ETUDE ET L'EXPLOITATION DES PROCEDES GEORGES CLAUDE
75321 Paris Cédex 07 (FR)**

(72) Inventeurs:
- **Moreau, Serge
78140 Velizy Villacoublay (FR)**
- **Polster, Bernd
75015 Paris (FR)**

(74) Mandataire: **Le Moenner, Gabriel et al
L'Air Liquide S.A.,
DSPI,
Service Brevets et Marques,
75 Quai d'Orsay
75321 Paris Cedex 07 (FR)**

(54) **Procédé de production d'hydrogène utilisant un adsorbant carboné à paramètres de dubinin sélectionnés**

(57) L'invention concerne un procédé pour la purification d'un flux d'hydrogène gazeux contenant une ou des impuretés gazeuses du groupe formé par le monoxyde de carbone, la vapeur d'eau, l'azote, le $H_2S$, le chlore, les alcools légers en $C_1$-$C_3$, l'ammoniac, le dioxyde de carbone et les hydrocarbures linéaires, ramifiés ou cycliques, saturés ou insaturés en $C_1$-$C_8$. Le flux d'hydrogène est mis en contact avec un adsorbant carboné poreux se caractérisant par un volume limite d'adsorption ($W_0$) et par un paramètre énergétique (E0) selon la relation de Dubinin, tels que : 0,18 $ml.g^{-1} \leq W_0 \leq 1{,}50\ ml.g^{-1}$ et 15 $kJ.mole^{-1} \leq E_0 \leq 45\ kJ.mole^{-1}$. L'adsorbant carboné poreux est choisi parmi les charbons actifs. Le gaz riche en hydrogène est un gaz de reformage, un gaz d'électrolyse, un gaz issu d'un craquage d'ammoniac ou d'un craquage d'alcool.

EP 1 095 701 A1

## Description

La présente invention concerne le domaine de la séparation de mélanges gazeux par adsorption sur un adsorbant carboné, tel un charbon actif, à propriétés améliorées, en particulier un procédé PSA pour produire de l'hydrogène.

Une unité PSA de purification d'hydrogène contient un adsorbant ou une combinaison d'adsorbants qui doit être capable de retenir sélectivement les impuretés contenues dans le gaz à traiter.

Les impuretés les plus communes des gaz contenant de l'hydrogène sont : $N_2$, $CO_2$, $CH_4$, CO, $C_2H_4$, $C_2H_6$, $C_3H_8$, $C_4$+, les composés BTX (benzène-toluène-xylène), la vapeur d'eau, les mercaptans, $H_2S$, $SO_2$.

Ces composés sont éliminés du flux d'hydrogène par un ensemble d'adsorbants placés en série.

Habituellement, de l'alumine ou du gel de silice retient essentiellement la vapeur d'eau ; le charbon activé est utilisé pour retenir les hydrocarbures lourds, le $CO_2$ et la vapeur d'eau ; et la zéolite est mise en oeuvre pour éliminer notamment les impuretés $N_2$, CO et $CH_4$.

La proportion des différents adsorbants dépend de la composition du gaz à traiter et de la pression.

Ainsi, il apparaît qu'il existe un grand nombre de combinaisons possibles d'adsorbants en prenant en compte la nature exacte des adsorbants et leur proportion relative.

La production d'hydrogène de pureté élevée est d'un grand intérêt sur le plan industriel, celui-ci étant largement utilisé dans de nombreux procédés de synthèse tels que l'hydrocraquage, la production de méthanol, la production d'oxoalcools et les procédés d'isomérisation.

Dans la technique antérieure, les procédés PSA se sont révélés très efficaces pour la séparation de mélanges gazeux et notamment pour la production d'hydrogène ou d'oxygène pur à partir de mélanges gazeux contaminés par diverses impuretés.

Les procédés PSA mettent à profit la sélectivité d'adsorption d'un adsorbant donné pour une ou plusieurs des substances contaminantes du mélange gazeux à purifier.

Dès lors, la production d'hydrogène par procédé PSA (Pressure Swing Adsorption = Adsorption avec Variation de Pression) a été largement étudiée.

Cependant, la plupart des documents traitant de ce sujet concernent essentiellement les cycles de production et de la manière de conduire ces cycles, dans le but de maximiser la récupération et/ou la pureté de l'hydrogène produit, ou bien d'optimiser l'investissement.

Cependant, le choix de l'adsorbant est délicat : il dépend d'une part de la nature du mélange à traiter. En règle générale les adsorbants sont sélectionnés en fonction de leur facilité à adsorber et à désorber un composé particulier.

De fait, les procédés PSA impliquent la mise en oeuvre de cycles de pression.

Dans une première phase, le lit d'adsorbant assure la séparation d'au moins un constituant du mélange par adsorption de ce constituant sur le lit d'adsorbant.

Dans une deuxième phase l'adsorbant est régénéré par abaissement de la pression des lits d'adsorbants fonctionnant en parallèle.

Les documents US-A-4,381,189 et FR-A-2,330,433 illustrent notamment une telle démarche.

L'élimination des impuretés contenues dans un flux d'hydrogène se fait, la plupart du temps, au moyen d'au moins deux lits d'adsorbants placés en série, à savoir classiquement un lit de charbon actif et un lit de zéolite.

A ce titre, on peut citer le document WO-A-97/45363 qui porte sur un procédé pour la purification de mélanges gazeux à base d'hydrogène, pollués par diverses impuretés, dont du monoxyde de carbone et au moins une autre impureté choisie parmi le dioxyde de carbone et les hydrocarbures linéaires, ramifiés ou cycliques, saturés ou insaturés en $C_1$-$C_8$. Le flux de gaz à purifier est mis en contact, dans une zone d'adsorption, avec un premier adsorbant sélectif du dioxyde de carbone et des hydrocarbures en $C_1$-$C_8$, et un second adsorbant qui est une zéolite du type faujasite échangée à au moins 80% au lithium et dont le rapport Si/Al est inférieur à 1,5, pour éliminer au moins le monoxyde de carbone (CO). Selon ce document, l'amélioration apportée par le procédé est due à l'utilisation d'une zéolite particulièrement efficace, à savoir une zéolite X échangée au lithium.

En outre, le document US-A-3,150,942 enseigne l'utilisation d'une zéolite contenant des cations sodium ou des cations sodium et calcium pour purifier un flux d'hydrogène.

De manière analogue, le document US-A-4,477,267 décrit un procédé de purification d'hydrogène mettant en oeuvre une zéolite X échangée de 70 à 90% avec des cations calcium et contenant, en outre, un liant inerte.

Le document US-A-4,957,514 divulgue un procédé de purification d'hydrogène mettant en oeuvre une zéolite X échangée de 60 à 80% avec des cations baryum.

En outre, le document US-A-5,489,327 concerne la purification d'hydrogène gazeux par mise en contact avec un hydrure d'alliage de zirconium.

Enfin, le document JP-A-860146024 décrit un procédé PSA pour purifier des gaz impurs utilisant une zéolite de type mordénite échangée au lithium, côté production et une autre zéolite, côté alimentation.

Par ailleurs, les documents US-A-3,702,525, US-A-3,986,849, US-A-4,077,779, US-A-4,153,428, US-A-4,696,680, US-A-4,813,980, US-A-4,963,339, US-A-3,430, 418, US-A-5,096,470, US-A-5,133,785, US-A-5,234,472, US-A-5,354,346, US-A-5,294,247 et US-A-5,505,764 décrivent des cycles de fonctionnement de procédés PSA pour produire de l'hydrogène.

A l'inverse, certains documents soulignent que l'adsorbant ou les adsorbants mis en oeuvre dans un procédé PSA pour purifier de l'hydrogène n'ont que peu, voire même aucune importance.

Ainsi, le document Pressure Swing Adsorption, 1994, VCH publishers, D.M. Ruthvens, S. Farooq, K.S. Knaebel, page 238, enseigne que "puisque la sélectivité pour la plupart des impuretés est élevée en comparaison de celle pour l'hydrogène, n'importe quel adsorbant peut être utilisé" pour purifier de l'hydrogène.

De manière analogue, d'après le document US-A-4,299,596, tous les adsorbants conventionnels peuvent être utilisés pour produire de l'hydrogène, par exemples, les charbons actifs, les gels de silice, les tamis moléculaires, tels que les zéolites, les tamis carbonés...

Par ailleurs, le document US-A-4,482,361 cite la possibilité d'utiliser indifféremment des adsorbants adéquats, tels que les tamis moléculaires zéolitiques, les charbons actifs, les gels de silice, les alumines activées ou similaires.

De façon analogue, le document US-A-4,834,780 enseigne que l'adsorption peut être effectuée dans tous les cas où l'on a sélectionné un adsorbant adapté pour le procédé de séparation considéré, par exemple, les charbons actifs, les gels de silice, les gels d'alumine ou les tamis moléculaires.

Il apparaît alors, au vu de l'art antérieur, que l'homme du métier considère habituellement qu'une amélioration de l'efficacité d'un procédé PSA de production ou purification d'hydrogène ne peut résulter, au mieux que d'une amélioration du cycle de production ou du matériau zéolitique mis en oeuvre, mais que l'influence de l'adsorbant mis en oeuvre n'est souvent que de peu d'importance, c'est-à-dire que l'adsorbant n'a que peu d'influence sur l'efficacité du procédé PSA.

Partant de là, le problème qui se pose alors est d'améliorer les procédés PSA de purification d'hydrogène, c'est-à-dire d'améliorer l'efficacité de l'élimination des impuretés contenues dans un flux d'hydrogène à purifier.

La présente invention vise à résoudre ce problème, c'est-à-dire que le procédé de l'invention permet le perfectionnement des procédés conventionnels de type PSA de séparation de l'hydrogène ou procédés par adsorption par variation de la pression.

L'invention concerne alors un procédé pour la purification d'un flux d'hydrogène gazeux contenant au moins une impureté gazeuse choisie dans le groupe formé par le monoxyde de carbone, la vapeur d'eau, l'azote, le $H_2S$, le $SO_2$, le dioxyde de carbone, le chlore, les alcools légers en $C_1$-$C_3$, l'ammoniac et les hydrocarbures linéaires, ramifiés ou cycliques, saturés ou insaturés en $C_1$-$C_8$, dans lequel le flux gazeux d'hydrogène à purifier est mis en contact avec au moins un adsorbant carboné poreux se caractérisant par un volume limite d'adsorption ($W_0$) et par un paramètre énergétique ($E_0$) selon la théorie de Dubinin, avec :

$$0,18\ ml.g^{-1} \leq W_0 \leq 1,50\ ml.g^{-1}$$

et

$$15\ kJ.mole^{-1} \leq E_0 \leq 45\ kJ.mole^{-1}.$$

Selon le cas, le procédé de l'invention peut comprendre l'une ou plusieurs des caractéristiques suivantes :

- $W_0$ est compris entre 0.20 $ml.g^{-1}$ et 1.20 $ml.g^{-1}$,
- $W_0$ est supérieur ou égal à 0.25 $ml.g^{-1}$,
- $W_0$ est supérieur ou égal à 0.30 $ml.g^{-1}$,
- $W_0$ est supérieur ou égal à 0.40 $ml.g^{-1}$, de préférence $W_0$ est supérieur ou égal à 0.50 $ml.g^{-1}$,
- $E_0$ est compris entre 20 $kJ.mole^{-1}$ et 40 $kJ.mole^{-1}$,
- $E_0$ est supérieur ou égal à 25 $kJ.mole^{-1}$,
- $E_0$ et $W_0$ sont tels que : $E_0 \leq 47.5 - 12,5.W_0$ et/ou $E_0 \geq 27.5 - 12,5\ .\ W_0$ ;
- $E_0$ et $W_0$ sont tels que : $E_0 \leq 42.5 - 12,5.W_0$ et/ou $E_0 \geq 30 - 12,5\ .\ W_0$ ;
- l'adsorbant carboné poreux est choisi parmi les charbons actifs, de préférence les charbons actifs produits à partir d'écorce de noix de coco, d'écorce de pin, de tourbe, de lignite, d'anthracite, de polymères, de résines ou d'autres matières premières organiques.
- le flux d'hydrogène est un gaz de synthèse ou de reformage, un gaz d'électrolyse, un gaz issu d'un craquage d'ammoniac ou d'un craquage d'alcool, tel le méthanol, de préférence un mélange gazeux contenant au moins 70% d'hydrogène.

- l'adsorbant carboné poreux a des pores ayant une taille comprise entre 0.4 nm et 4 nm, préférentiellement entre 0.5 nm et 2 nm.
- il est de type PSA, à un ou plusieurs adsorbeurs, de préférence plusieurs adsorbeurs. Habituellement, les cycles d'un procédé PSA comprennent successivement, pour chaque adsorbeur :

  . une phase de production sensiblement isobare à la pression haute du cycle d'adsorption,
  . une phase de régénération de l'adsorbant comprenant au moins une étape de décompression à co-courant par équilibrage de pression avec un autre adsorbeur ; une étape de dépressurisation finale à contre-courant avec évacuation de gaz résiduaire ; et généralement une étape d'élution à la pression basse du cycle , le gaz d'élution provenant d'au moins une deuxième étape de décompression à co-courant d'un adsorbeur ; et
  . une phase de repressurisation comprenant au moins une étape d'équilibrage de pression avec un autre adsorbeur et une étape de recompression finale au moyen de gaz de production.

De façon générale , les cycles peuvent comprendre plusieurs étapes d'équilibrage, total ou partiel, préférentiellement de 1 à 4 étapes d'équilibrage. Les transferts gazeux peuvent s'effectuer directement d'adsorbeur à adsorbeur ou par l'intermédiaire d'une ou plusieurs capacités de stockage de gaz. Les étapes de recompression par équilibrage et de recompression par le gaz de production peuvent être ou non au moins partiellement simultanées, et comporter éventuellement une repressurisation partielle par de l'alimentation en gaz. Des étapes complémentaires de balayage peuvent être introduites, en particulier si on veut récupérer pour la valoriser une autre fraction du gaz à traiter différente de l'hydrogène. De plus, le cycle peut également comporter des temps d'attente durant lesquels les adsorbeurs sont isolés.

- la pression d'adsorption est comprise entre 5 bars et 70 bars, de préférence entre 15 bars et 40 bars,
- la pression de désorption est comprise entre 0.1 bar et 10 bars, de préférence entre 1 et 5 bars,
- la température du flux d'hydrogène à purifier est comprise entre -25 °C et + 60°C, de préférence entre + 5°C et + 35°C.
- le flux d'hydrogène gazeux est mis, en outre, en contact avec un lit d'un adsorbant zéolitique, de préférence une zéolite X, LSX ou A.
- la zéolite est de préférence de type faujasite échangée à au moins 70% au lithium, une zéolite de type faujasite dont le rapport Si/Al est compris entre 1 et 1,2 et est, de préférence, égal à 1.
- le rapport volumique de l'adsorbant carboné poreux à l'adsorbant zéolitique est compris entre 10/90 et 90/10, de préférence entre 50/50 et 80/20.

L'invention concerne, en outre, un adsorbant carboné poreux, se caractérisant par un volume limite d'adsorption $W_0$ et par un paramètre énergétique $E_0$, selon la théorie de Dubinin, avec : $0{,}18\ ml.g^{-1} \leq W_0 \leq 1{,}50\ ml.g^{-1}$ et $15\ kJ.mole^{-1} \leq E_0 \leq 45\ kJ.mole^{-1}$, de préférence
$E_0 \leq 47.5 - 12{,}5\ .\ W_0$ et/ou $E_0 \geq 27.5 - 12{,}5\ .\ W_0$.

En effet, les inventeurs de la présente invention ont montré que, de façon surprenante, une amélioration notable de l'efficacité d'un procédé PSA de purification d'un flux d'hydrogène en les impuretés qu'il contient peut être obtenue grâce à un choix judicieux de l'adsorbant carboné, c'est-à-dire du charbon actif, mis en oeuvre dans le procédé PSA, en particulier lorsque ledit charbon actif est utilisé en association avec un lit d'un autre adsorbant, de préférence un lit de zéolite.

En effet, bien qu'il soit habituel d'utiliser des particules de charbon actif pour éliminer certaines des impuretés contenues dans les flux d'hydrogène, jusqu'à présent, il n'avait jamais été mis en évidence que la structure microporeuse du charbon actif microporeux joue un rôle important dans les performances d'un procédé d'adsorption de type PSA pour purifier ou séparer un flux d'hydrogène gazeux.

Or, il existe une structure de micropores qui assure des performances optimales en terme de rendement de récupération d'hydrogène.
La structure des micropores définit l'intensité des forces d'adsorption ainsi que le volume mis en jeu.

En effet, un charbon actif est un composé non cristallisé classiquement obtenu par chauffage et oxydation ménagée d'un précurseur carboné qui peut être d'origine végétale (noix de coco, écorce de pin), minière (tourbe, lignite, anthracite) ou bien synthétique (polymère).

Il est caractérisé par au moins deux paramètres qui sont le volume poreux total et l'intensité d'adsorption qui dépend entre autres de la taille des pores.

Une méthode bien connue pour caractériser un charbon actif est la théorie M.M. Dubunin, (voir par exemple F.Stoeckli et D. Morel : Chimia 34 (1980) N°12 (Décembre), ou bien M.M. Dubinin, Carbon, Vol 26, N°1, P.97, 1988.

Dans la théorie de Dubinin-Astakhov, le volume de phase adsorbée W (en $cm^3/g$) par gramme d'adsorbant microporeux dépend de la fugacité f et de la température T suivant l'expression (1) :

$$W = W_0 \times \exp\left(-\left(\frac{RT \times \ln\left(\frac{f_s}{f}\right)}{\beta E_o}\right)^n\right) \quad (1)$$

où :

- $W_0$ est le volume des micropores accessibles (volume limite d'adsorption) par gramme d'adsorbant,
- $f_s$ est la fugacité de vapeur saturante de l'adsorbat,
- $E_0$ est l'énergie caractéristique de l'adsorption d'une vapeur de référence sur l'adsorbant donné en $J.mol^{-1}$ (on choisit le benzène comme référence),
- n est un paramètre dépendant de l'hétérogénéité de l'adsorbant, compris en général entre 1,5 et 3 (on fixera ici n=2),
- β est le coefficient d'affinité de l'adsorbat considéré (paramètre énergétique dépendant de l'adsorbat),
- R est la constante des gaz parfaits, c'est-à-dire 8,314 $J^{-1}.mol.K$.

De là, la quantité adsorbée W (en $Ncm^3/g$) est donnée par l'équation (2) suivante :

$$W = W_0 \times \exp\left(-\left(\frac{RT \times \ln\left(\frac{f_s}{f}\right)}{\beta E_o}\right)^n\right) . \frac{V_m.d}{M} \quad (2)$$

où :

- d est la densité de la phase adsorbée ($kg.m^{-3}$) dans les conditions considérées,
- M est la masse molaire de l'adsorbat (g/mol),
- $V_m$ est le volume molaire de la phase adsorbée pris égal à 22,414 $l.mol^{-1}$.

Le calcul de fugacités, de d et β est explicité ci-après.

Quand l'adsorbant est non-polaire, une approximation permettant de calculer les coefficients d'affinité est donnée par l'équation (3) suivante :

$$\beta_j = \frac{(\alpha_p)_j}{(\alpha_p)_*} \quad (3)$$

où :

- $(\alpha_p)_j$ est la polarisabilité de l'adsorbat j (en $cm^3$),

- $(\alpha_p)^*$ est la polarisabilité d'un adsorbat de référence.

Ainsi, lorsque le benzène ($C_6H_6$) est choisi comme adsorbat de référence, les valeurs des polarisabilités des composés étant données par l'Encyclopédie des gaz, éditée par L'Air Liquide, Division scientifique (Elsevier, 1976)

On obtient les valeurs de coefficients d'affinité données dans le Tableau I suivant.

Tableau I :

| Coefficients d'affinité dans le modèle de Dubinin | | |
|---|---|---|
| Molécule | $\alpha_p$ | Coefficient d'affinité |
| $C_6H_6$ | 9,89 | 1 |
| $CO_2$ | 2,594 | 0,26 |
| $CH_4$ | 2,699 | 0,27 |
| $N_2$ | 1,734 | 0,17 |
| CO | 1,926 | 0,19 |
| $H_2$ | 0,8023 | 0,08 |

D'après le document *Physical adsorption of gases at high pressure* ; Journal of colloid and interface science, Vol. 79, N°2, 1981, Wakasugi, Ozawa, Ogino, l'équation (4) suivante permet d'évaluer la densité de la phase adsorbée ($kg.m^{-3}$) :

$$d_j = \frac{d_j^*}{\exp(\alpha.(T-T_j^*))} \quad (4)$$

où :

- $T_j^*$ (en K) est la température d'ébullition normale (P=1atm) de l'adsorbat j,
- T (en K) est la température absolue,
- $d_j^*$ ($kg.m^{-3}$) est la densité de l'adsorbat à $T_j^*$,
- $\alpha$ ($K^{-1}$) est l'expansion thermique de la phase adsorbée.

On donne à $\alpha$ la valeur de l'expansion thermique moyenne du liquide surchauffé, soit $\alpha = 2{,}5.10^{-3}\ K^{-1}$.

A partir des valeurs tabulées dans *Physical adsorption of gases at high pressure,* on obtient les expressions données dans le Tableau II suivant.

Tableau II: Expression de la densité de la phase adsorbée de $CO_2$, $CH_4$ et $H_2$

| | Densité de la phase adsorbée ($kg.m^{-3}$) |
|---|---|
| $CO_2$ | $d = \frac{1155{,}755}{\exp(2{,}5.10^{-3}.(T-223{,}15))}$ |
| $CH_4$ | $d = \frac{422{,}62}{\exp(2{,}5.10^{-3}.(T-111{,}63))}$ |
| $H_2$ | $d = \frac{70{,}973}{\exp(2{,}5.10^{-3}.(T-20{,}384))}$ |

L'expression de la pression de vapeur saturante d'un adsorbat en fonction de la température est donnée,

pour une température inférieure à la température critique du composé, par l'expression (5) :

$$P_s = \exp\left(-\frac{a}{T} + b\right) \qquad (5)$$

Dans le cas sur-critique (T>Tc), l'expression (6) suivante est utilisée :

$$P_j = \left(\frac{T}{T_{c,j}}\right)^2 . P_{c,j} \qquad (6)$$

Les expressions ainsi déterminées sont regroupées ci-dessous dans le Tableau III ; les températures sont exprimées en K et les pressions en bars.

<u>Tableau III</u> : Expression des pressions de vapeur saturantes de $CO_2$, $CH_4$ et $H_2$

| | $T < T_c$ | $T \geq T_c$ |
|---|---|---|
| $CO_2$ | $P_s = \exp\left(-\frac{1987}{T} + 10,827\right)$ | $P_s = \left(\frac{T}{304,21}\right)^2 .73,825$ |
| $CH_4$ | $P_s = \exp\left(-\frac{1026,3}{T} + 9,1948\right)$ | $P_s = \left(\frac{T}{190,53}\right)^2 .45,96$ |
| $H_2$ | $P_s = \exp\left(-\frac{124,56}{T} + 6,2449\right)$ | $P_s = \left(\frac{T}{33,24}\right)^2 .12,98$ |

En outre, pour un constituant i d'un mélange donné en phase vapeur, la fugacité est donnée par la relation suivante (7) de définition du coefficient de fugacité en phase vapeur :

$$f_i^{(v)} = \varphi_i \times P \times y_i \qquad (7)$$

où :

- $f^{(v)}$ : Fugacité en phase vapeur,
- $\varphi$ :Coefficient de fugacité en phase vapeur,
- P :Pression,
- y :Fraction molaire.

La thermodynamique classique fournit la relation (8) suivante de détermination du coefficient de fugacité en phase vapeur :

$$\ln(\varphi_i) = \frac{1}{RT} \times \int_0^P \left(\frac{\partial V}{\partial n_i} - \frac{RT}{P}\right) dP \qquad (8)$$

La recherche du coefficient de fugacité se ramène donc à la connaissance de $\frac{\partial V}{\partial n_i}$ qui est fournie par l'équation d'état du système considéré V = V(P,T,ni).

Pour un gaz pur, les expressions précédentes se ramènent aux relations (9) :

$$\begin{cases} f^{(V)} = \varphi \times P \\ \ln(\varphi) = \frac{1}{RT} \times \int_0^P \left( v - \frac{RT}{P} \right) dP \\ v = v(P,T) \end{cases} \qquad (9)$$

où v est le volume molaire du gaz pur considéré.

L'équation d'état choisie est l'équation de Peng-Robinson qui doit permettre un champ d'action assez large pour les conditions (10) opératoires :

$$P = \frac{RT}{v-b} - \frac{a(T)}{v(v+b)+b(v-b)} \qquad (10)$$

avec :

$$a(T) = \Omega_a \times \frac{R^2 T^2}{P_c} \times \alpha(T)$$

$$b(T) = \Omega_b \times \frac{RT}{P_c}$$

$\Omega_a$ = 0,45724
$\Omega_b$ = 0,07780

$$\sqrt{\alpha} = 1 + S \times \left(1 - \sqrt{T_R}\right)$$

$S$ = 0,375 +1,542 × ω - 0,270 × $\omega^2$

où :

- ($T_c$, $P_c$) est le point critique.
- ω est le facteur acentrique du gaz considéré.
- $T_R$ est la température réduite ($\frac{T}{T_c}$).

A titre d'indications, le facteur acentrique de certains gaz est donné dans le Tableau IV ci-après.

Tableau IV :

| Valeurs du facteur acentrique | |
|---|---|
| Composant | ω |
| $H_2$ | ≈0,02 |
| $CO_2$ | 0,225 |
| $CH_4$ | 0,013 |

L'équation d'état (11) est une équation cubique, c'est-à-dire qu'elle s'écrit comme une équation du troisième

degré en v, paramétrée par les conditions opératoires :

$$Pv^3 + (bP - RT)v^2 + (a - 2RTb - 3Pb^2)v + Pb^3 + RTb^2 - ab = 0 \quad (11)$$

Par ailleurs, l'expression du coefficient de fugacité se met sous la forme (12) suivante :

$$\ln(\varphi) = \frac{vP}{RT} - 1 - \ln\left(\frac{P(v-b)}{RT}\right) + \frac{a(T)}{2RTb\sqrt{2}}\ln\left(\left|\frac{v-b\left(-1+\sqrt{2}\right)}{v+b\left(1+\sqrt{2}\right)}\right|\right) \quad (12)$$

Les conditions opératoires étant choisies, l'équation (11) permet de calculer le volume molaire du gaz et l'équation (12) le coefficient de fugacité.

A partir des valeurs tabulées du volume molaire de $H_2$, $CO_2$, et $CH_4$, les coefficients utilisés dans l'équation de Peng-Robinson sont réajustés à chaque composant.

Tableau V : Paramètres pour l'équation d'état de Peng-Robinson

| | $CH_4$ | $CO_2$ | $H_2$ |
|---|---|---|---|
| $\Omega_a$ | 0,67659 | 0,45724 | 0,45724 |
| $\Omega_b$ | 0,09446 | 0,07780 | 0,07347 |
| $\omega$ | 0,013 | 0,225 | 0,020 |

Ainsi l'adsorption d'un gaz connu, par exemple le $CO_2$, permet d'obtenir la valeur des paramètres Wo et $E_0$ qui caractérisent respectivement, le volume et l'intensité d'adsorption.

Partant de la formule (1) précédente, les inventeurs de la présente invention ont montré que certaines combinaisons des paramètres $W_0$ et $E_0$ conduisent à des adsorbants présentant des propriétés améliorées pour la production d'hydrogène par procédé PSA, à savoir :

$$0{,}18 \text{ ml.g}^{-1} \leq W_0 \leq 1{,}50 \text{ ml.g}^{-1}$$

$$15 \text{ kJ.mole}^{-1} \leq E_0 \leq 45 \text{ kJ.mole}^{-1}.$$

en particulier, lorsque ces paramètres $W_0$ et $E_0$ sont compris dans la bande (voir figure 2) définie par les relations suivantes :

$$E_0 \leq 47.5 - 12{,}5 \, . \, W_0 \quad \text{et/ou} \quad E_0 \geq 27.5 - 12{,}5 \, . \, W_0.$$

Les isothermes d'adsorptions du $CO_2$ obtenus pour différentes valeurs des paramètres $E_0$ et $W_0$ sont ché-

matisées sur la figure 1 ci-annexée, où l'on constate l'existence d'une grande variabilité de forme et de respiration en fonction des valeurs de $E_0$ et $W_0$ choisies.

De façon générale, pour choisir ou déterminer si un adsorbant carboné est compris ou non dans les plages de paramètres $E_0$ et $W_0$ ci-dessus, il suffit de mesurer son isotherme d'adsorption q = f(P), de préférence au gaz carbonique, de préférence à plusieurs températures.

On calcule W à partir de q en calculant la densité de l'adsorbat à l'état liquide aux températures d'adsorption.

La pression d'ébullition de l'adsorbat est calculée en fonction de la température.

Par ajustement numérique sur l'équation (1), on détermine les valeurs $W_0$, $E_0$ et éventuellement n.

Plus précisément, les hypothèses principales du modèle de calcul du logiciel de simulation de procédé utilisés sont les suivantes :

- le modèle de l'adsorbeur est mono-dimensionnel et les distributions gazeuses, d'adsorption et de vitesses sont radialement uniformes,
- la paroi de l'adsorbeur est à température constante,
- le lit d'adsorbant est fixe: le critère de Ledoux est donc toujours vérifié.
- le modèle thermique comporte une seule température, c'est-à-dire que celle de l'adsorbant et que celle du gaz sont égales,
- la cinétique d'adsorption suit le modèle de la Linear Driving Force (Force Motrice Linéaire), c'est-à-dire que l'accumulation de masse dans les grains d'adsorbant est proportionnelle à la différence entre les concentrations dans les macropores et dans les espaces inter granulaires.
- l'adsorption est modélisée par l'équation (12) de Langmuir pour les corps purs :

$$q = \frac{kP}{1+bP} \qquad (12)$$

où k est la constante de Henri, et b le coefficient de courbure

La co-adsorption est simulée par le modèle (13) de Langmuir généralisé :

$$q_k = \frac{q_{s,k} \cdot b_k \cdot p_k}{1+\sum_j b_j \cdot p_j} \quad (k=1,2,\ldots,m) \qquad (13)$$

où :

- $q_s$ sont les capacités maximales d'adsorption,
- b les constantes de Langmuir,
- p les pressions partielles,
- q les quantités adsorbées,

Le cycle de base du procédé PSA de l'invention se décompose alors en quatre phases principales qui comportent chacune une ou plusieurs étapes :

- Phase 1 : phase de production
- Phase 2 : phase de dépressurisation (équilibrage et dépressurisation pour élution)
- Phase 3 : phase de purge et d'élution
- Phase 4 : phase de recompression (recompression par équilibrage et recompression finale)

Le cycle se caractérise par une pression d'adsorption de 26 bars et une pression basse de 1,6 bars

Le mélange gazeux introduit dans le procédé PSA est composé d'environ 70 % d'$H_2$, de 26 % de $CO_2$, et de 4 % de $CH_4$.

Les temps d'étapes sont les suivants :

- Production 1 : 60 s
- Production 2 (pour la recompression finale) : 120 s
- Dépressurisation par équilibrage : 60 s

- Temps mort : 30 s
- Dépressurisation pour élution : 90 s
- Purge : 90 s
- Elution : 90 s
- Recompression par équilibrage : 60 s
- Recompression finale : 120 s

Les valeurs k et b de l'équation de Langmuir nécessaires au logiciel de simulation de cycle sont établies par ajustement sur les valeurs du modèle de Dubinin suivant la méthode des moindres carrés.
Les valeurs intéressantes sont situées dans la gamme suivante :

$$k = 15 \text{ à } 950 \text{ Ncm}^3/\text{g/b et } b = 0.022 \text{ à } 1.5 \text{ b}^{-1} \text{ pour } CO_2$$

$$k = 6 \text{ à } 315 \text{ Ncm}^3/\text{g/b et } b = 0.014 \text{ à } 0.50 \text{ b}^{-1} \text{ pour } CH_4$$

Les caractéristiques de l'isotherme sont exprimées en termes de coefficient de courbure C calculé suivant la relation (14):

$$c = \frac{q(P1)}{q(P2)} * \frac{P2}{P1} \qquad (14)$$

- P2 et P1 étant les pressions partielle haute et basse pour $CO_2$ et $CH_4$
- q(P) étant la quantité adsorbée à la pression P
- c prend les valeurs entre 1.5 et 10.5 pour $CO_2$ et entre 1.5 et 3.5 pour $CH_4$ pour les pressions haute et basse de 26 bars et 1.6 bars ; les valeurs spécialement intéressantes étant c entre 1.5 et 2.5 pour $CH_4$ et c entre 2 et 6 pour CO2.

Le rendement en hydrogène, qui est donné par le rapport de la quantité d'hydrogène produite par chaque adsorbeur à la quantité d'hydrogène introduite dans chaque adsorbeur, est le paramètre déterminant dans l'optimisation des performances d'une unité PSA $H_2$.
Les résultats de simulation donnent l'influence des coefficients $W_o$ et $E_o$ sur le rendement d'hydrogène.
En effet, la figure 2 fait apparaître que les valeurs optimales de rendement en hydrogène de l'unité PSA ayant été simulée passent par une zone définie du plan ($W_o$, $E_o$).
La zone ainsi définie est comprise entre les droites d'équation $E_o = 47.5 - 12.5 \times W_o$ et $E_o = 27.5 - 12.5 \times W_o$.
De là, les adsorbants présentant la meilleure efficacité sont situés dans cette zone du plan ($W_o$, $E_o$).

## Revendications

1. Procédé pour la purification d'un flux d'hydrogène gazeux contenant au moins une impureté gazeuse choisie dans le groupe formé par le monoxyde de carbone, la vapeur d'eau, l'azote, le $H_2S$, le dioxyde de carbone, le chlore, les alcools légers en $C_1$-$C_3$, l'ammoniac et les hydrocarbures linéaires, ramifiés ou cycliques, saturés ou insaturés en $C_1$-$C_8$, dans lequel le flux gazeux d'hydrogène à purifier est mis en contact avec au moins un adsorbant carboné poreux se caractérisant par un volume limite d'adsorption ($W_0$) et par un paramètre énergétique ($E_0$) selon la relation de Dubinin, avec :

$$0{,}18 \text{ ml.g}^{-1} \leq W_0 \leq 1{,}50 \text{ ml.g}^{-1}$$

et

$$15 \text{ kJ.mole}^{-1} \leq E_0 \leq 45 \text{ kJ.mole}^{-1}.$$

**2.** Procédé selon la revendication 1,, caractérisé en ce que $W_0$ est compris entre 0.20 ml.g$^{-1}$ et 1.20 ml.g$^{-1}$, de préférence $W_0$ est supérieur ou égal à 0.25 ml.g$^{-1}$, préférentiellement encore $W_0$ est supérieur ou égal à 0.30 ml.g$^{-1}$.

**3.** Procédé selon l'une des revendications 1 ou 2, caractérisé en ce que $E_0$ est compris entre 20 kJ.mole$^{-1}$ et 40 kJ.mole$^{-1}$, de préférence $E_0$ est supérieur ou égal à 25 kJ.mole$^{-1}$.

**4.** Procédé selon l'une des revendications 1 à 3, caractérisé en ce que $E_0$ et $W_0$ sont tels que :

$$E_0 \leq 47.5 - 12{,}5 \,.\, W_0 \quad \text{et/ou} \quad E_0 \geq 27.5 - 12{,}5 \,.\, W_0$$

**5.** Procédé selon l'une des revendications 1 à 4, caractérisé en ce que l'adsorbant carboné poreux est choisi parmi les charbons actifs, de préférence les charbons actifs produits à partir d'écorce de noix de coco, de tourbe, de lignite, d'anthracite, de polymères ou de résines.

**6.** Procédé selon l'une des revendications 1 à 5, caractérisé en ce que le flux d'hydrogène est un gaz de synthèse ou de reformage, un gaz d'électrolyse, un gaz issu d'un craquage d'ammoniac ou d'un craquage d'alcool, de préférence un mélange gazeux contenant au moins 70% d'hydrogène.

**7.** Procédé selon l'une des revendications 1 à 6, caractérisé en ce que l'adsorbant carboné poreux a des pores ayant une taille comprise entre 0.4 nm et 4 nm, de préférence entre 0.5 nm et 2 nm.

**8.** Procédé selon l'une des revendications 1 à 7, caractérisé en ce qu'il est de type PSA.

**9.** Procédé selon l'une des revendications 1 à 8, caractérisée en ce que la pression d'adsorption est comprise entre 5 bars et 70 bars, de préférence entre 15 bars et 40 bars, et/ou la pression de désorption est comprise entre 0.1 bar et 10 bars, de préférence entre 1 et 5 bars.

**10.** Procédé selon l'une des revendications 1 à 9, caractérisé en ce que la température du flux d'hydrogène à purifier est comprise entre -25 °C et + 60°C, de préférence entre + 5°C et + 35°C.

**11.** Procédé selon l'une des revendications 1 à 10, caractérisé en ce que le flux d'hydrogène gazeux est mis, en outre, en contact avec un lit d'un adsorbant zéolitique, de préférence une zéolite X ou A.

**12.** Procédé selon l'une des revendications 1 à 11, caractérisé en ce que la zéolite est de préférence de type faujasite échangée à au moins 70% au lithium, une zéolite de type faujasite dont le rapport Si/Al est compris entre 1 et 1,2 et est, de préférence, égal à 1.

**13.** Procédé selon l'une des revendications 1 à 12, caractérisé en ce que le rapport volumique de l'adsorbant carboné poreux à l'adsorbant zéolitique est compris entre 10/90 et 90/10, de préférence entre 50/50 et 80/20.

**14.** Adsorbant carboné poreux, se caractérisant par volume limite d'adsorption $W_0$ et par un paramètre énergétique $E_0$, selon la relation de Dubinin, avec :

$$0{,}18 \text{ ml.g}^{-1} \leq W_0 \leq 1{,}50 \text{ ml.g}^{-1}$$

et

$$15 \text{ kJ.mole}^{-1} \leq E_0 \leq 45 \text{ kJ.mole}^{-1},$$

de préférence

$$E_0 \leq 47.5 - 12{,}5 \,.\, W_0$$

et/ou

$$E_0 \geq 27.5 - 12,5 \cdot W_{0.}$$

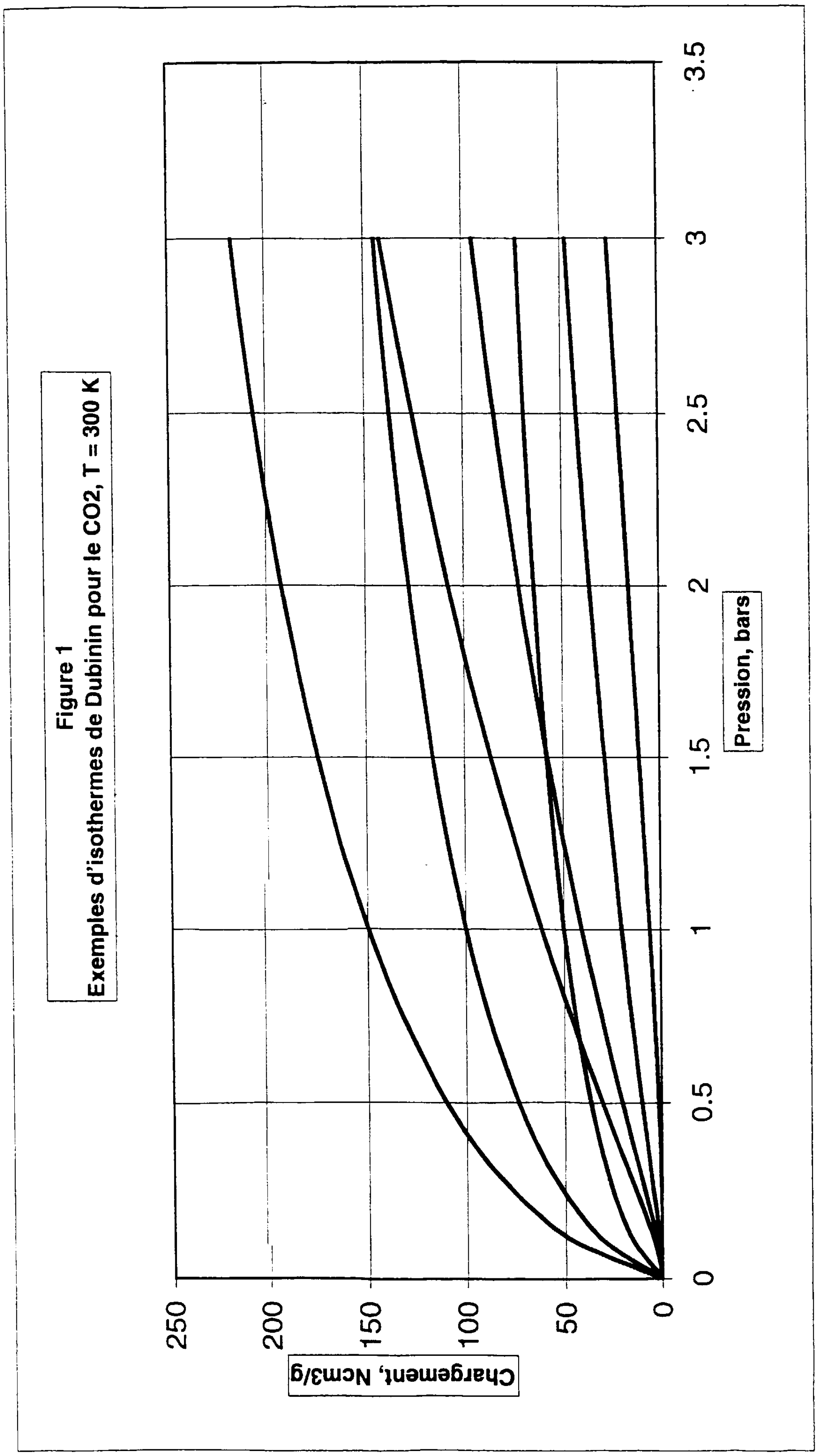


Figure 1
Exemples d'isothermes de Dubinin pour le CO2, T = 300 K

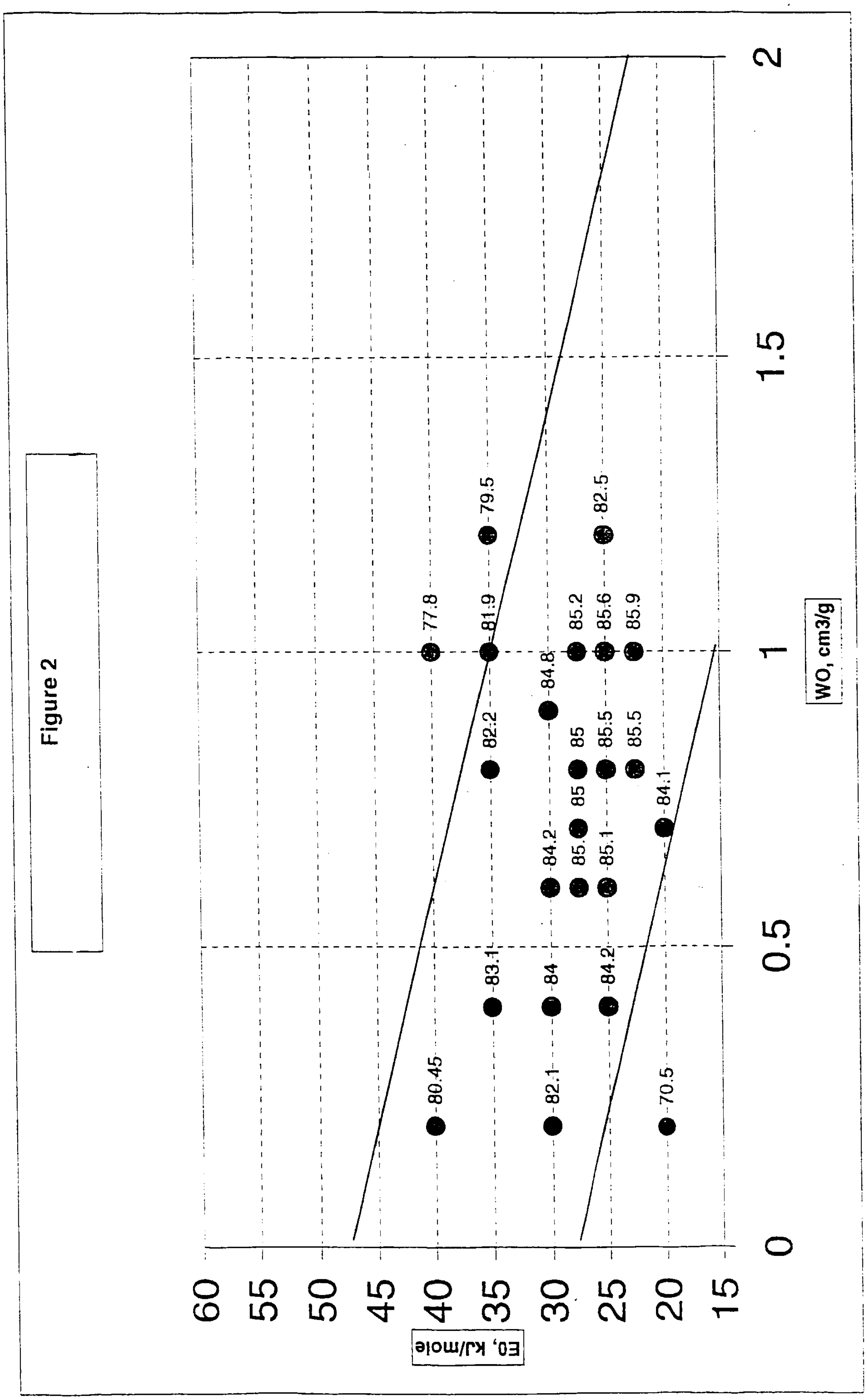
E0, kJ/mole
60
55
50
45
40
35
30
25
20
15
WO, cm3/g
0
0.5
1
1.5
2
80.45
82.1
70.5
83.1
84
84.2
84.2
85.1
84.1
85
82.2
85
85.5
85.5
84.8
77.8
81.9
85.2
85.6
85.9
79.5
82.5
Figure 2

Office européen des brevets

**RAPPORT PARTIEL DE RECHERCHE EUROPEENNE**
qui selon la règle 45 de la Convention sur le brevet européen est consideré, aux fins de la procédure ultérieure, comme le rapport de la recherche européenne

Numéro de la demande
EP 00 40 2915

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | WO 97 45363 A (L'AIR LIQUIDE)<br>4 décembre 1997 (1997-12-04)<br>* page 4, ligne 4 - page 5, ligne 23 *<br>* page 7, ligne 7 - page 7, ligne 23 *<br>* page 15, ligne 20 - page 20, ligne 9 *<br>--- | 1-6,8-14 | B01D53/047<br>B01D53/04<br>C01B31/08<br>C01B3/56<br>B01J20/20 |
| X | US 5 925 168 A (JUDKINS ET AL)<br>20 juillet 1999 (1999-07-20)<br>* colonne 5, ligne 59 - colonne 6, ligne 43 *<br>* colonne 7, ligne 7 - colonne 7, ligne 15 *<br>--- | 1-10,14 | |
| X | US 5 447 557 A (GOLDEN ET AL)<br>5 septembre 1995 (1995-09-05)<br>* colonne 2, ligne 40 - colonne 3, ligne 12 *<br>--- | 14 | |
| X | US 5 135 548 A (GOLDEN ET AL)<br>4 août 1992 (1992-08-04)<br>* colonne 3, ligne 30 - colonne 3, ligne 65 *<br>* colonne 7, ligne 43 - colonne 7, ligne 63 *<br>---<br>-/-- | 14 | |

| DOMAINES TECHNIQUES RECHERCHES (Int.Cl.7) |
|---|
| B01D<br>C01B<br>B01J |

## RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| LA HAYE | 12 janvier 2001 | Doolan, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C08)

Office européen des brevets

**RECHERCHE INCOMPLETE**
**FEUILLE SUPPLEMENTAIRE C**

Numéro de la demande
EP 00 40 2915

Revendications ayant fait
l'objet de recherches incomplètes:
1-14

Raison pour la limitation de la recherche:

Les revendications 1-14 présentes concernent un procédé et un produit défini au moyen des paramètres suivants:

P1: une volume limite d'adsorption (Wo)
P2: un paramètre énergétique (Eo)

L'utilisation de ces paramètres est considérée, dans le présent contexte, comme menant à un manque de clarté au sens de l'Article 84 EPC. Il est impossible de comparer les paramètres que le déposant a choisi d'utiliser avec ce qui est révélé dans l'état de la technique. Le manque de clarté qui en découle est tel q'une recherche significative complète est impossible. Par conséquent, la recherche a été limitée à:

Procédés pour la purification d'un flux d'hydrogène gazeux, dans lequel le flux gazeux à purifier est mis en contact avec au moins un adsorbant carboné poreux, qui a des pores ayant une taille comprise entre 0.4 nm et 4 nm, et

Adsorbant carboné poreux qui a des pores ayant une taille comprise entre 0.4 nm et 4 nm.

Office européen des brevets

# RAPPORT PARTIEL DE RECHERCHE EUROPEENNE

Numero de la demande
EP 00 40 2915

| DOCUMENTS CONSIDERES COMME PERTINENTS | | | CLASSEMENT DE LA DEMANDE (Int.Cl.7) |
|---|---|---|---|
| Catégorie | Citation du document avec indication, en cas de besoin, des parties pertinentes | Revendication concernée | |
| X | EP 0 554 805 A (AIR PRODUCTS AND CHEMICALS, INC) 11 août 1993 (1993-08-11)<br>* page 5, ligne 49 - page 7, ligne 40; exemples 49-54 *<br>--- | 14 | |
| X | US 3 960 522 A (MUNZNER ET AL)<br>1 juin 1976 (1976-06-01)<br>* colonne 1, ligne 61 - colonne 1, ligne 66; revendication 1 *<br>----- | 14 | |
| | | | DOMAINES TECHNIQUES RECHERCHES (Int.Cl.7) |

EPO FORM 1503 03.82 (P04C11)

**ANNEXE AU RAPPORT DE RECHERCHE EUROPEENNE
RELATIF A LA DEMANDE DE BREVET EUROPEEN NO.** EP 00 40 2915

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-01-2001

| Document brevet cité au rapport de recherche | Date de publication | Membre(s) de la famille de brevet(s) | Date de publication |
|---|---|---|---|
| WO 9745363 A | 04-12-1997 | FR 2749004 A | 28-11-1997 |
| | | AU 3035997 A | 05-01-1998 |
| | | DE 69700400 D | 16-09-1999 |
| | | DE 69700400 T | 23-03-2000 |
| | | EP 0840708 A | 13-05-1998 |
| | | US 5912422 A | 15-06-1999 |
| US 5925168 A | 20-07-1999 | AUCUN | |
| US 5447557 A | 05-09-1995 | AUCUN | |
| US 5135548 A | 04-08-1992 | BR 9201659 A | 15-12-1992 |
| | | CA 2067944 A | 09-11-1992 |
| | | EP 0512424 A | 11-11-1992 |
| | | JP 5168916 A | 02-07-1993 |
| | | MX 9202126 A | 01-11-1992 |
| | | NO 921795 A | 09-11-1992 |
| EP 554805 A | 11-08-1993 | US 5240474 A | 31-08-1993 |
| | | CA 2088034 A | 31-07-1993 |
| | | JP 2516159 B | 10-07-1996 |
| | | JP 5269331 A | 19-10-1993 |
| | | KR 9514208 B | 23-11-1995 |
| US 3960522 A | 01-06-1976 | DE 2119829 A | 16-11-1972 |
| | | BE 769800 A | 10-01-1972 |
| | | CA 980320 A | 23-12-1975 |
| | | CA 991617 A | 22-06-1976 |
| | | CA 991618 A | 22-06-1976 |
| | | CA 991560 A | 22-06-1976 |
| | | FR 2134965 A | 08-12-1972 |
| | | GB 1364674 A | 29-08-1974 |
| | | IT 939731 B | 10-02-1973 |
| | | JP 52018675 B | 23-05-1977 |
| | | NL 7109767 A,B, | 25-10-1972 |
| | | US 3801513 A | 02-04-1974 |
| | | US 3979330 A | 07-09-1976 |
| | | US 3960769 A | 01-06-1976 |
| | | US 4015956 A | 05-04-1977 |
| | | ZA 7104559 A | 29-03-1972 |

EPO FORM P0460

Pour tout renseignement concernant cette annexe : voir Journal Officiel de l'Office européen des brevets, No.12/82